Europäisches Patentamt

European Patent Office

Office européen des brevets

(11) Publication number: **0 053 398**
**B1**

# (12) EUROPEAN PATENT SPECIFICATION

(45) Date of publication of patent specification: **14.08.85**

(21) Application number: **81110080.9**

(22) Date of filing: **02.12.81**

(51) Int. Cl.⁴: **H 02 K 15/04**

(54) **Coil forming machine.**

(30) Priority: **03.12.80 JP 171228/80**

(43) Date of publication of application:
**09.06.82 Bulletin 82/23**

(45) Publication of the grant of the patent:
**14.08.85 Bulletin 85/33**

(84) Designated Contracting States:
**DE GB**

(56) References cited:
**GB-A-1 215 425**
**GB-A-1 385 619**
**US-A-3 445 077**
**US-A-4 047 293**

(73) Proprietor: **Matsushita Electric Industrial Co.,**
**Ltd.**
**1006, Oaza Kadoma**
**Kadoma-shi Osaka-fu, 571 (JP)**

(72) Inventor: **Kubota, Tadashi**
**5-4, Myokenzaka 4-chome**
**Katano-shi Osaka-fu 576 (JP)**
Inventor: **Hamane, Tokuhito**
**16-19, Nagao Tanimachi 3-chome**
**Hirakata-shi Osaka-fu 573-01 (JP)**
Inventor: **Tasai, Masaaki**
**16-1, Miyamae-cho**
**Kadoma-shi Osaka-fu 571 (JP)**

(74) Representative: **Eisenführ & Speiser**
**Martinistrasse 24**
**D-2800 Bremen 1 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a coil forming machine comprising a former assembly around which a coil is formed, a flier for winding a wire around the former assembly to form the coil thereon, a coil receiving jig for supporting the coil thereon after such coil has been transferred from the former assembly, and a vibration generating device for generating mechanical high frequency vibrations.

US—A—4 047 293 discloses a winding insertion device for axially inserting the windings of a dynamoelectric machine wherein the inserting device is provided with a pair of blade holders axially aligned with respect to one another. A first set of blades is attached to one of said blade holders whereas a second set of blades is attached to the second blade holder. Additionally, means are provided for moving said first and second blade holders relative to each other in a reciprocal movement pattern during winding insertion, with consequent movement of the respective blade sets. Therefore, the insertion jig is subjected to mechanical shock or vibration while the formed coil is inserted into the stator.

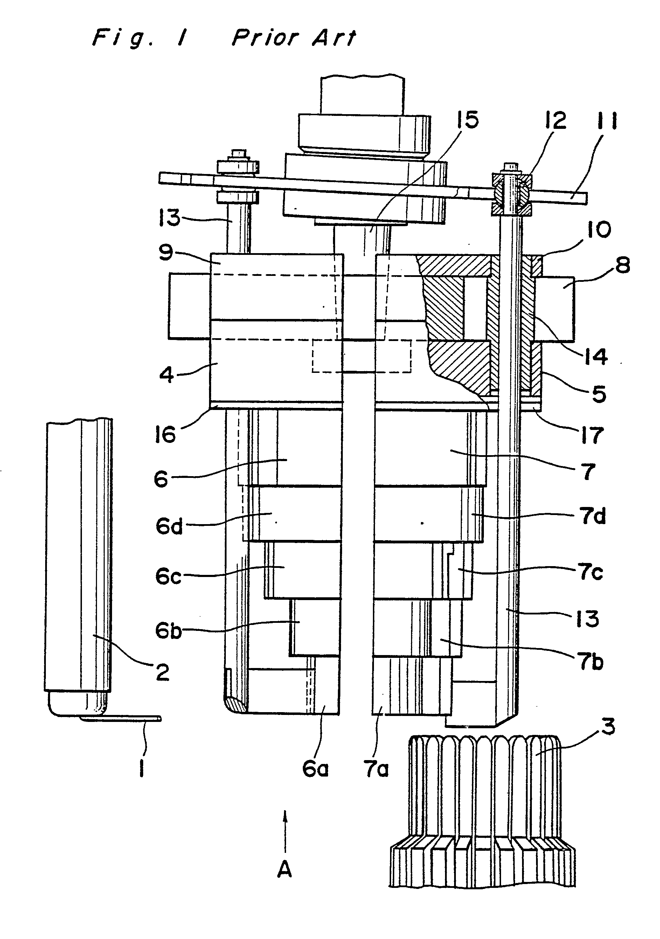

In the following, two typical prior art coil forming machines will be described with reference to Figs. 1 and 2, and 3 and 4, respectively.

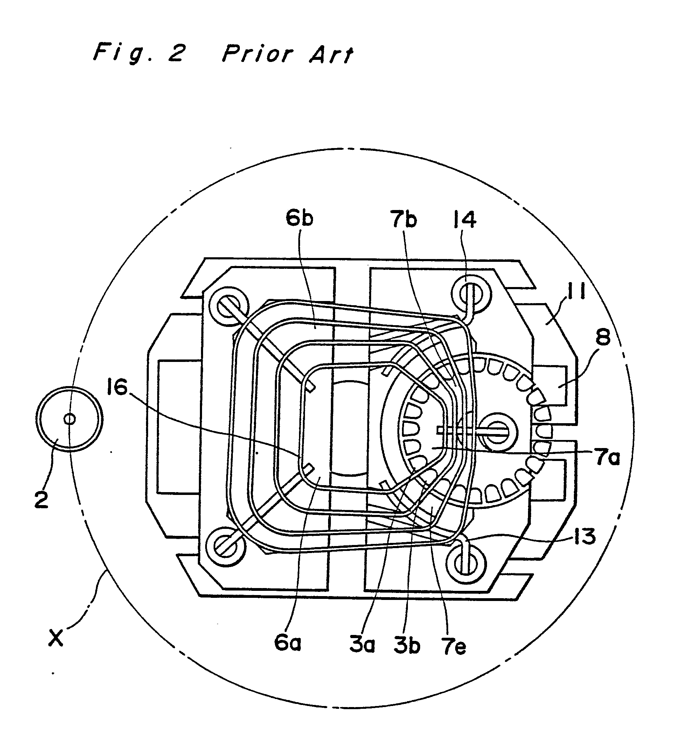

In Figs. 1 and 2, 1 represents an electric wire, 2 represents a flier through which the wire 1 extends, and 3 represents a coil receiving jig. 4 and 5 represents respective support plates for carrying movable and fixed coil formers 6 and 7, said movable coil former 6 having a plurality of winding steps 6a, 6b, 6c and 6d whereas said fixed coil former 7 has a corresponding number of winding steps 7a, 7b, 7c and 7d and also an opening 7e adapted to receive the coil receiving jig 3 therethrough. 8 represents a carrier plate, and 9 and 10 represent respective retainer plates through which the associated support plates 4 and 5 are rigidly secured to the carrier plate 8. 11 represents a tiltable plate, 12 represents a spherical bearing, 13 represents coil ejecting rods, 14 represents bearing sleeves through which the associated rods 13 are axially slidably supported, 15 represents a support shaft to which the carrier plate 8 is rigidly secured, and 16 represents a coil.

In the construction described above, when the coil receiving jig 3 is positioned below and in alignment with the fixed coil former 7, the support shaft 15 is lowered to allow the coil receiving jig 3 to be inserted into the opening 7e in the fixed coil former 7 with the winding step 7a engaged to blades 3a. Subsequent movement of the flier 2, with the wire 1 extending therethrough, along a circular orbit X results in the winding of the wire 1 around the winding steps 6a and 7a to form a first-stage coil 16. At this time, the free end of the wire 1 is caught by a lead wire cutter (not shown) but can be released therefrom after the coil 16 having a predetermined number of turns has been completed. In synchronism with the movement of the flier 2 along the circular orbit X, the tiltable plate 11 undergoes a rocking motion which is in turn transmitted to the rods 13 to reciprocate the latter in their axial direction so that the coil 16 being formed on the winding steps 6a and 7a can be shifted downwards towards the coil receiving jig 3 and finally allowed to fall onto the jig 3. After the completion of the formation of the first-stage coil, the support shaft 15 is again lowered to allow the step 7b to engage the blades 3a so that the wire 1 having been wound around the steps 6a and 7a by the flier 2 can be wound on the steps 6b and 7b to form a second-stage coil. In this way, subsequent coils, i.e., third-stage and fourth-stage coils are sequentially formed one after another around the steps 6c and 7c and the steps 6d and 7d.

In the prior art machine of the type described above, transportation of the individual coils from the former assembly, composed of the formers 6 and 7, onto the coil receiving jig 3 is forcibly performed by the utilization of the ejecting rods 13.

However, the employment of the ejecting rods 13 has been found posing some problems. By way of example, as the winding speed increases with the correspondingly increased speed of reciprocation of the ejecting rods 13, the coil formed on the former assembly is downwardly pushed by the ejecting rods 13 at a speed of, for example, 5,000mm/sec in the case where the rods 13 are spaced 50mm from the shaft 15, the tiltable plate 11 is inclined at 11° and the flier 2 is rotated at 1,800 r.p.m. This means that some turns of the coil facing the rods 13 are severely beaten by the reciprocating rods 13, thereby giving damage to the coil. Moreover, the rocking motion of the tiltable plate 11 is accompanied by the increased frictional resistance constituting a source of increased noises.

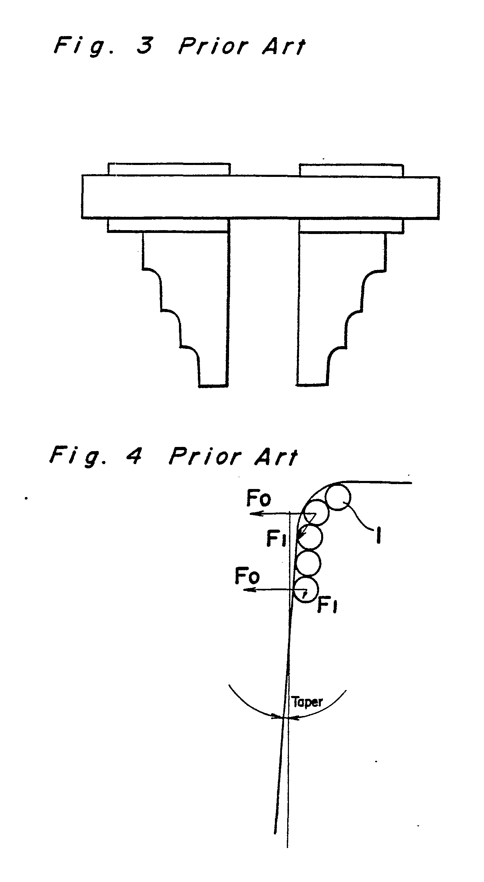

Another prior art coil forming machine is schematically illustrated in Figs. 3 and 4 and will now be discussed with reference thereto.

Fig. 3 illustrates a longitudinal sectional representation of a coil former assembly and Fig. 4 illustrates, on an enlarged scale, the state in which the wire 1 has been wound on the former assembly. Some features of this coil former assembly shown in Fig. 3 reside in that each winding step is downwardly tapered and that each upper transit region of the steps is rounded radially inwardly of the former assembly. This design has been developed with a view to substantially allowing the formed coil to be downwardly shifted by a vector component $F_1$ of the winding force $F_0$ which, as shown in Fig. 4, acts in a direction along the former assembly. However, it has been found that, since the force necessary to push the coil downwards is a vector component of the winding force as hereinabove described, the wire being wound around the former assembly tends to be excessively tensioned, resulting in the elongation of the wire and also the formation of relatively large interstices among the turns of the wire forming the coil.

Furthermore, in the machine utilizing the former assembly described with reference to Figs. 3 and 4, a high speed winding of the wire to form the coil tends to result in generation of an insufficient force necessary to push the coil downwards and also in an irregular pattern in which the wire is wound. In addition, a smooth transfer of the coil from the former assembly onto the coil receiving jig can not be performed with no difficulty.

Starting from the known device it is an object of the present invention to develop a coil forming machine with the view to substantially eliminating the disadvantages of the prior art machines and in particular to achieve a coil inserting machine wherein a high speed winding of the wire to form a coil can be performed including a sufficient force necessary to push the coil downwards at any time, securing thereby that no irregular pattern in which the wire is wound can occur and that a smooth transfer of the coil from the former assembly onto the coil receiving jig can be performed without any difficulties.

According to the invention this object is solved by altering the known coil forming machine referred to initially in that said vibration generating device is operably connected with and applies the mechanical high frequency vibration to said former assembly, and that an amplitude amplifier is provided for amplifying the amplitude of the mechanical high frequency vibrations generated by said vibration generating device, said vibration generating device being operated during the winding of the wire around said former assembly.

The coil forming machine thus requires no ejecting rod, tiltable table, spherical bearing and bearing sleeve, whereas an amplitude amplifier is provided to amplify the amplitude of the mechanical vibrations such that the transfer of the coil onto the receiving jig is done smoothly.

There now follows a detailed description of two different preferred embodiments taken in conjunction with the accompanying drawings, in which:

Fig. 1 is a longitudinal side view, with a portion broken away, of the former assembly and the coil receiving jig used in one type of the prior art coil forming machines;

Fig. 2 is a bottom plan view of the former assembly as viewed in the direction shown by the arrow A in Fig. 1;

Fig. 3 is a schematic side view of the former assembly used in another type of the prior art coil forming machine;

Fig. 4 is a diagram showing the state in which an electric wire is turned around the former assembly shown in Fig. 3; and

Figs. 5 and 6 are perspective views of a coil forming machine according to different embodiments of the present invention.

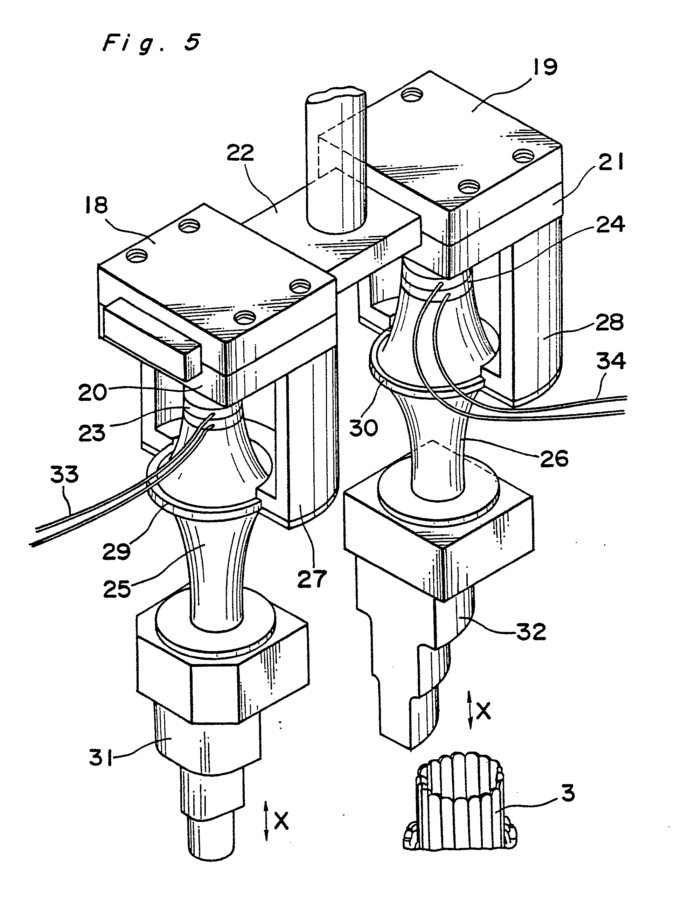

In the first embodiment of Fig. 5 retainer plates 18 and 19 rigidly secure support plates 20 and 21 for the supported associated coil formers 31 and 32 to a carrier plate 22. Vibration generating devices 23 and 24 for converting electrical energies into mechanical vibrations are provided. Amplitude amplifiers 25 and 26 are operatively associated with the respective vibration generating devices 23 and 24 for increasing the mechanical vibrations. Support stands 27 and 28 support the associated amplitude amplifiers 25 and 26 and also the coil formers 31 and 32, respectively, through flanges 29 and 30. Said support stands 27 and 28 are rigidly secured to the associated support plates 20 and 21.

A high frequency current generated by a high frequency oscillator (not shown) is supplied to both vibration generating devices 23 and 24 through supply lines 33 and 34 to convert the electrically vibrations into the mechanical vibrations. The amplitude of the mechanical vibrations is increased by the amplitude amplifiers 25 and 26 and the amplified mechanical vibrations are utilized to vibrate the coil formers 31 and 32 in a repective direction (shown by the arrows X in Fig. 5).

The mechanical high frequency vibrations provide that the coil formed on the coil former assembly composed of the formers 31 and 32 can be smoothly shifted downwards onto a coil receiving jig. The vibration frequencies are varied depending upon the coil diameters.

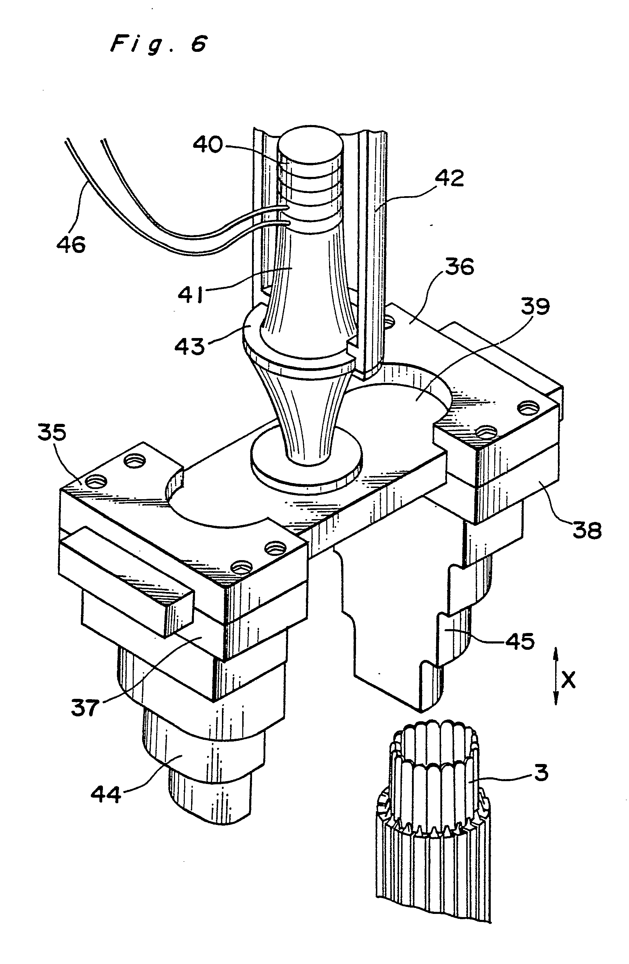

In the embodiment of Fig. 6, retainer plates 35 and 36 rigidly secure support plates 37 and 38 for the support of coil formers 44 and 34 to a carrier plate 39. The retainer plates 35 and 36, the support plates 37 and 38, the carrier plate 39, the coil formers 44 and 45, a vibration generating device 40 and an amplitude amplifier 41 supply a high frequency current, which has been generated by a high frequency oscillator (not shown) suspended by a support stand 42 through a flange 43, to the vibration generating device 40 to convert the electrical vibrations into mechanical vibrations. The mechanical vibrations are, after the amplitude thereof has been increased by the amplitude amplifier 41, in turn apply to the retainer plates 35 and 36, the carrier plate 39, the support plates 37 and 38 and the coil formers 44 and 45 to vibrate them in direction shown by the arrow X in Fig. 6.

The mechanical high frequency vibrations provide that the coil formed on the former assembly composed of the coil formers 44 and 45 can smoothly be shifted downwards onto a coil receiving jig 3 in a manner similar to that in the foregoing embodiment.

Thus, as compared with the machine wherein the ejecting rods are utilized, the present invention is such that no ejecting rod is required and, therefore, none of the tiltable plate, the spherical bearing and the bearing sleeve is required. This means that the machine according to the present invention is simple in structure and free from mechanical vibrations which otherwise constitute a cause of noises, providing with a relatively large freedom of design choice in connection with the former assembly. Moreover, the machine embodying the present invention is, because of the reduced number of the component parts, durable and can operate for a substantially prolonged period of time.

In addition, as compared with the machine utilizing the former assembly of the construction shown in Fig. 3, the present invention is such that no high tension is required on the wire being coiled and, therefore, neither the elongation of the wire nor the formation of large interstices among the turns of the wire take place. Therefore, according to the present invention, not only is the production of coils having no loss of resiliency possible, but also the insertion of the coil can readily be performed with the increased percentage of occupation of the coil relative to the slot in the former assembly. With the coil made according to the present invention, it is possible to assemble an electric motor of high performance.

## Claims

1. A coil forming machine comprising a former assembly around which a coil is formed, a flier for winding a wire around the former assembly to form the coil thereon, a coil receiving jig for supporting the coil thereon after such coil has been transferred from the former assembly, and a vibration generating device for generating mechanical high frequency vibrations, characterized in that said vibration generating device (23, 24; 40) is operably connected with and applies the mechanical high frequency vibration to said former assembly (31, 32; 44, 45), and that an amplitude amplifier (25, 26; 41) is provided for amplifying the amplitude of the mechanical high frequency vibrations generated by said vibration generating device (23, 24; 40), said vibration generating device (23, 24; 40) being operated during the winding of the wire around said former assembly (31, 32; 44, 45).

2. A coil forming machine as claimed in claim 1, characterized in that said former assembly (44, 45) comprises a pair of mating formers, said formers (44, 45) being operatively coupled through a plate member (35—39) to said vibration generating device (40) and said amplitude amplifier (41).

3. A coil forming machine as claimed in claim 1, characterized in that said former assembly (31, 32) comprises a pair of mating formers, each of said formers (31, 32) being operatively coupled to said vibration generating device (23, 24) and said amplitude amplifier (25, 26) provided for each of said formers (31, 32).

## Patentansprüche

1. Maschine zur Herstellung von Spulen, mit einer Formungsanordnung, um die herum die Spule gebildet wird, mit einem Flügelelement zum Wickeln eines Leiters um die Formungsanordnung, um darauf die Spule zu bilden, mit einem die Spule aufnehmenden Bock zum Tragen der Spule, nachdem sie von der Formungsanordnung überführt ist, und mit einer Vibrationen erzeugenden Vorrichtung zum Erzeugen mechanischer hochfrequenter Vibrationen, dadurch gekennzeichnet, daß die Vibration erzeugende Vorrichtung (23, 24; 40) operativ mid der Formungsanordnung (31, 32; 44, 45) verbunden ist und dieser die mechanische hochfrequente Vibration zuführt, und daß ein Amplitudenverstärker (25, 26; 41) zum Verstärken der Amplitude der von der Vibrationen erzeugenden Vorrichtung (23, 24; 40) erzeugten, mechanischen, hochfrequenten Vibrationen vorgesehen ist, wobei die Vibrationen erzeugende Vorrichtung (23, 24; 40) während des Wickelns des Leiters um die Formungsanordnung (31, 32; 44, 45) betrieben wird.

2. Maschine zur Herstellung von Spulen gemäß Ansprüch 1, dadurch gekennzeichnet, daß die Formungsanordnung (44, 45) ein Paar Former (44, 45) aufweist, die operativ mittels eines Plattenelementes (35 bis 39) mit der Vibrationen erzeugenden Vorrichtung (40) und mit dem Amplitudenverstärker (41) gekoppelt sind.

3. Maschine zur Herstellung von Spulen gemäß Ansprüch 1, dadurch gekennzeichnet, daß die Formungsanordnung (31, 32) ein Paar Former (31, 32) aufweist, wobei beide Former (31, 32) operativ mit der Vibrationen erzeugenden Vorrichtung (23, 24) und mit dem für jeden der beiden Former (31, 32) vorgesehenen Amplitudenverstärker (25, 26) gekoppelt sind.

## Revendications

1. Machine à former les enroulements comprenant un dispositif de mise en forme autour duquel est formé une bobine, un dispositif rotatif pour enrouler un fil autour du dispositif de mise en forme afin d'y former la bobine, un gabarit de réception de la bobine, qui supporte celle-ci après qu'elle ait été transférée depuis le dispositif de mise en forme, et un dispositif générateur de vibrations pour générer des vibrations mécaniques de haute fréquence, caractérisée en ce que ledit dispositif générateur de vibrations (23, 24; 40) est relié de manière opérationnelle audit dispositif de mise en forme (31, 32; 44, 45), et lui applique les vibrations mécaniques de haute fréquence, et en ce que un amplificateur d'amplitude (25, 26; 41) est installé pour amplifier l'amplitude des vibrations mécaniques de haute fréquence générées par ledit dispositif générateur de vibrations (23, 24; 40), ledit dispositif générateur de vibrations (23, 24; 40) étant activé lors de l'enroulement du fil autour dudit dispositif de mise en forme (31, 32; 44, 45).

2. Machine à former les enroulements telle que revendiquée en revendication 1, caractérisée en ce que ledit dispositif de mise en forme (44, 45) comprend une paire de calibres de forme accouplés, lesdits calibres de forme (44, 45) étant couplés opérationnellement audit dispositif générateur de vibrations (40) et audit amplificateur d'amplitude (41) au moyen d'un élément de plaque (35—39).

3. Machine à former les enroulements telle que revendiquée en revendication 1, caractérisée en ce que ledit dispositif de mise en forme (31, 32) comprend une paire de calibres de forme accouplés, chacun desdits calibres de forme (31, 32) étant couplé opérationellement audit dispositif générateur de vibrations (23, 24) et audit amplificateur d'amplitude (25, 26) installé pour chacun desdits calibres de forme (31, 32).

*Fig. 1    Prior Art*

*Fig. 2   Prior Art*

Fig. 3  Prior Art

Fig. 4  Prior Art

Fig. 5

Fig. 6